# EUROPEAN PATENT APPLICATION

(11) **EP 2 381 719 A1**
(43) Date of publication of application: **26.10.2011**
(21) Application number: 10360020.1
(22) Date of filing: 23.04.2010
(51) Int. Cl.: H04W 36/00, H04W 12/06

(54) **Configuration determination**

(71) Applicant: Alcatel- Lucent Shanghai Bell Co., Ltd, 75008 Paris (FR)
(72) Inventor: Stephen, Virginie, 91440 Bures sur Yvette (FR); Mitri, Isabelle, 91190 Gif sur Yvette (FR); Isnard, Olivier, 91190 Gif sur Yvette (FR)
(74) Representative: Leppard, Andrew John

(57) **Abstract**

A method of determining a configuration of a first network node in response to a change in configuration requested by a second network node of a wireless telecommunications network, a network node and a computer program product are disclosed. The method of determining a configuration of a first network node in response to a change in configuration of the first network node requested by a second network node of a wireless telecommunications network comprises the steps of: even when no pending handover trigger involving the first network node has been identified by the second network node, transmitting a reconfiguration message from the second network node to the first network node, the reconfiguration message encoding both updated configuration information and updated security information, the updated configuration information requesting an existing configuration of the first network node to be changed to an updated configuration and the updated security information requesting an existing security configuration for authentication between the first and second network nodes to be changed to an updated security configuration; and determining the configuration of the first network node from authentication information encoded in a message received from the first network node, the authentication information being encoded in accordance with that security configuration being utilised by the first network node. In this way, it is possibly to reliably determine whether or not a requested configuration change has been made simply by examining authentication information contained in a subsequent message from the first network node.

## Description

### FIELD OF INVENTION

The present invention relates to a method of determining a configuration of a first network node in response to a change in configuration requested by a second network node of a wireless telecommunications network, a network node and a computer program product.

### BACKGROUND

Wireless telecommunications systems are known. In those known systems, radio coverage is provided to user equipment, for example, mobile telephones, by geographical area. A base station is located in each geographical area to provide the required radio coverage to the user equipment. Usually the user equipment in the area served by a base station receives information and data from the base station and transmits information and data to the base station.

Information and data transmitted by the base station to the user equipment occurs on radio frequency channels known as downlink channels. Information and data transmitted by user equipment to the base station occurs on radio frequency channels known as uplink channels.

To enable communication between the user equipment and base station to occur, various parameters controlling the operation of the user equipment need to be configured. For example, parameters relating to the base station which the user equipment is to be served by needs to be configured in the user equipment. Likewise, any changes to that configuration that may be required thereafter, either as a result of requests from the core network or in response to demands placed on the network by the user equipment or its applications, may also need to be configured. Information is typically transmitted from the serving base station to the user equipment to configure those parameters.

Although techniques exist for managing changes to the user equipment configuration, these may lead to undesirable consequences. Accordingly, it is desired to provide an improved technique for controlling configuration of a network node.

### SUMMARY

According to a first aspect, there is provided a method of determining a configuration of a first network node in response to a change in configuration of the first network node requested by a second network node of a wireless telecommunications network, the method comprising the steps of: even when no pending handover trigger involving the first network node has been identified by the second network node, transmitting a reconfiguration message from the second network node to the first network node, the reconfiguration message encoding both updated configuration information and updated security information, the updated configuration information requesting an existing configuration of the first network node to be changed to an updated configuration and the updated security information requesting an existing security configuration for authentication between the first and second network nodes to be changed to an updated security configuration; and determining the configuration of the first network node from authentication information encoded in a message received from the first network node, the authentication information being encoded in accordance with that security configuration being utilised by the first network node.

The first aspect recognises that situations can occur which result in a misalignment between the configuration in one network node and another network node. For example, one network node may request a change in configuration of another network node but, for whatever reason, the change in configuration may not occur or no positive indication is provided that the change in configuration has occurred. This leads to a potential misalignment of configuration between the network nodes which results from a lack of certainty of whether a particular configuration change requested by one network node has in fact been made in another network node. The existence of such uncertainty may lead to undesirable consequences since a network node may not operate exactly in the manner expected.

For example, the first aspect recognises that in the Long Term Evolution (LTE) architecture defined by the third generation partnership project (3GPP), a class of reconfiguration requests exists which in some circumstances may lead to a mismatch in configuration. This class of reconfiguration requests are those which would not normally have any impact on the security configuration of the network node (it will be appreciated that changes in the security configuration of the network node will typically be required for reconfigurations occurring due to an impending handover, such as an inter-cell or intra-cell handover, both of which typically require the network node to be re-keyed or for changes in configuration information relating to a handover). When such reconfigurations from this class are requested, it may be that the configurations become misaligned due to a radio link failure occurring around the time that the reconfiguration is requested or due to the network node not being able to implement the requested reconfiguration. In both of these circumstances, it may not be possible to reliably determine whether the network node has actually made the configuration changes. This is because although a specific message exists which confirms that a reconfiguration change has been implemented, another message is used when a requested configuration change has not been implemented and that message also serves a dual purpose of indicating when communications between the network nodes need to be re-established due to a radio link failure. Accordingly, it is not possible to reliably determine from that dual purpose message whether the reconfiguration message was not received due to a radio link failure and so no reconfiguration has occurred, whether the reconfiguration has occurred but then a radio link failure has occurred and communications now need to be re-established, or whether the reconfiguration message was received but the network node is unable to make the requested changes. Although the dual purpose message may encode an indicator which indicates the type of failure that has occurred (such as a reconfiguration failure), it has been found that such an indicator is not reliably implemented in all network nodes and so cannot be relied on to help resolve this potential mismatch.

Accordingly, a method of determining a configuration of a first network node in response to a change in configuration of that network node by a second network node is provided. A reconfiguration message may be transmitted from the first network node to the second network node, the reconfiguration message may encode the updated or new configuration information which requests the first network node to update or change its configuration to an updated or new configuration. The new configuration information may relate to a change in configuration of the first network node which is unrelated to a handover. In other words, the new configuration may be required for purposes other than for a handover event. The reconfiguration message may also encode updated security information which requests that the authentication techniques used between the network nodes are changed to a new or updated configuration. The configuration of the network node can then subsequently be reliably determined directly from authentication information encoded in the message received subsequently from the first network node. This is because the authentication information will be encoded in accordance with the security configuration which is currently being utilised by the first network node. The security configuration will be only be updated if the other configuration changes also included in the reconfiguration message are received and implemented by the first network node. Hence, if the authentication information is updated, it is possible to determine that the first network node has been reconfigured with the updated configuration requested in the reconfiguration message.

To provide certainty that a particular change in configuration has occurred, the reconfiguration message may include the updated security information even when the reconfiguration is not one where a change in security configuration would normally be required because the particular change in configuration is unrelated to a pending handover, such as an inter-cell or intra-cell handover. In other words, despite no handover being required or in the event that no handover is required (which can be determined by the network node through the absence of a handover trigger) or in the event that the reconfiguration being requested is unrelated to a handover, a reconfiguration message which is normally used in handover is utilised to communicate those configuration changes which are unrelated to a handover in order to force an update in the security configuration to be made when the other configuration changes are made. Accordingly, it can be seen that a reconfiguration message is sent which also changes the security configuration despite no change in security configuration being necessary because there is no pending handover. However, by linking the configuration change to a security configuration change, it is possible to determine that any changes requested have actually been made, since if the security changes have been made then the other requested changes will have also been made. In this way, it is possibly to reliably determine whether or not a requested configuration change has been made simply by examining authentication information contained in a subsequent message from the first network node. Such an approach provides a convenient technique to determine whether a configuration change has been implemented which removes any dependency on the first network node to reliably encode an indicator which indicates when a failure has occurred. As mentioned above, the verification of such configuration changes was not previously possible because, for many types of configuration changes, such as those made at times other than when a pending handover trigger has been identified, no updates to the security configuration would have been made. Without such an update to the security information being made, it was not possible to reliably determine within the existing messaging arrangements whether a change in configuration had occurred.

Despite the benefits that this approach provides, it will be appreciated that this approach has a number of drawbacks. First, the change in the security configuration requested, even when no change is security configuration is strictly necessary, may cause a reduction in the throughput of the communications between the network node, since communications need to be re-established using that updated security configuration. Also, the inclusion of the updated security information is simply to enable existing messages to be used to confirm that an update to the configuration has occurred, whereas previously the change in security configuration was necessary to enable the network node to be reconfigured to communicate with a new cell after handover. Furthermore, the use of the change in security configuration would in many respects have appeared to be unnecessary since existing re-establishment messages may typically include an indication of why such re-establishment is necessary, such as, for example, due to a reconfiguration failure. However, the first aspect recognises that in many circumstances the benefits of being able to determine that a reconfiguration has occurred outweighs these drawbacks and avoids reliance on fully compliant network nodes.

In one embodiment, the step of determining comprises determining whether the first network node is configured to the existing configuration or the updated configuration based on whether the authentication information is encoded in accordance with the existing security configuration or the updated security configuration. Accordingly, it may be possible to directly determine the current configuration of the network node from the authentication information. If the authentication information is encoded in accordance with the existing security configuration, then the network node is configured with the existing configuration, whereas if the authentication information is encoded in accordance with the updated security configuration, then the network node is configured with the updated configuration. Hence, it is possible to reliably determine the configuration state of the network node directly from the authentication information. It will be appreciated that this is only possible because an update to the security configuration was requested at the same time as the other changes in configuration.

In one embodiment, the step of determining comprises determining that the first network node has not reconfigured to the updated configuration when the authentication information is encoded in accordance with the existing security configuration. Hence, it is possible to determine that the network node has not adopted the updated configuration when the authentication information is encoded in accordance with the existing security configuration.

In one embodiment, the step of determining comprises determining that the first network node remains in the existing configuration when the authentication information is encoded in accordance with the existing security configuration.

In one embodiment, the step of determining comprises determining that the first network node has reconfigured to the updated configuration when the authentication information is encoded in accordance with the updated security configuration.

In one embodiment, the method comprises the steps of: performing the steps of transmitting and determining when a message is received indicating that the first network node is unlikely to have reconfigured to the updated configuration in response to an earlier reconfiguration message from the second network node encoding the updated configuration information without the updated security information. Accordingly, it is possible to only to cause a reconfiguration to occur in combination with a security update when an indication is received that a previous request to make that configuration change may not have been accepted or where the previous request may have failed. Accordingly, in those circumstances, the reconfiguration request is re-transmitted but this time in combination with an update to the security configuration. This helps to minimise the occurrence of such security configuration changes to only those situations where there may be difficulty in performing the configuration change and it is desirable to provide certainty of whether the requested change has been made or not.

In one embodiment, the message comprises a Radio Resource Control (RRC) Re-establishment Request. Accordingly, the message encoding the authentication information may be an existing RRC Re-establishment Request. Hence, the authentication information may be encoded utilising a pre-existing message.

In one embodiment, the authentication information comprises a shortMAC-I. Accordingly, the shortMAC-I may be utilised to encode the authentication information. It will be appreciated that such a shortMAC-I typically utilises network node and cell identifiers, together with security configuration information such as, for example, encryption keys and encryption algorithms in its generation. Accordingly, it is possible to directly determine from the shortMAC-I the security configuration being utilised by the first network node.

In one embodiment, the updated configuration information requests the first network node to change configuration of at least one of characteristics of the first network node physical layer, Media Access Control (MAC) layer, Radio Link Control (RLC) layer and Radio Resource Control (RRC) layer. Accordingly, the updated configuration information may request changes in the configuration of characteristics of various different protocol layers of the network node.

In one embodiment, the updated configuration information requests the first network node to change configuration of at least one of a bearer and measurements to be made by the first network node. Hence, examples of the updated configuration may include changes in the radio bearers of the first network node and changes in the measurement reports made by the first network node.

In one embodiment, the updated security information requests the first network node to utilise updated encryption characteristics for authentication. Accordingly, the updated security information may request the network node to update the keys or algorithms in encryption or integrity protection procedures.

In one embodiment, the reconfiguration message comprises an RRC Connection Reconfiguration Message. Accordingly, an existing reconfiguration message may be used to transmit both the updated configuration and the updated security configuration information.

In one embodiment, the first network node comprises user equipment and the second network node comprises a base station.

According to a second aspect, there is provided a network node operable to determine a configuration of a first network node of a wireless telecommunications network in response to a requested change in configuration, the network node comprising: transmission logic operable, even when no pending handover trigger involving the first network node has been identified by the second network node, to transmit a reconfiguration message from the second network node to the first network node, the reconfiguration message encoding both updated configuration information and updated security information, the updated configuration information requesting an existing configuration of the first network node to be changed to an updated configuration and the updated security information requesting an existing security configuration for authentication between the first and second network nodes to be changed to an updated security configuration; and determination logic operable to determine the configuration of the first network node from authentication information encoded in a message received from the first network node, the authentication information being encoded in accordance with that security configuration being utilised by the first network node.

In one embodiment, the determination logic is operable to determine whether the first network node is configured to the existing configuration or the updated configuration based on whether the authentication information is encoded in accordance with the existing security configuration or the updated security configuration.

In one embodiment, the determination logic is operable to determine that the first network node has not reconfigured to the updated configuration when the authentication information is encoded in accordance with the existing security configuration.

In one embodiment, the determination logic is operable to determine that the first network node remains in the existing configuration when the authentication information is encoded in accordance with the existing security configuration.

In one embodiment, the determination logic is operable to determine that the first network node has reconfigured to the updated configuration when the authentication information is encoded in accordance with the updated security configuration.

In one embodiment, the network node comprises activation logic operable to activate the transmission logic and the determination logic when a message is received indicating that the first network node is unlikely to have reconfigured to the updated configuration in response to an earlier reconfiguration message encoding the updated configuration information without the updated security information.

In one embodiment, the message comprises a Radio Resource Control (RRC) Re-establishment Request.

In one embodiment, the authentication information comprises a shortMAC-I.

In one embodiment, the updated configuration information requests the first network node to change configuration of at least one of characteristics of the first network node physical layer, Media Access Control (MAC) layer, Radio Link Control (RLC) layer and Radio Resource Control (RRC) layer.

In one embodiment, the updated configuration information requests the first network node to change configuration of at least one of a bearer and measurements to be made by the first network node.

In one embodiment, the updated security information requests the first network node to utilise updated encryption characteristics for authentication.

In one embodiment, the reconfiguration message comprises an RRC Connection Reconfiguration Message.

In one embodiment, the first network node comprises user equipment and the second network node comprises a base station.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates different protocol layers;
Figure 3 illustrates Radio Resource Control Connection Reconfiguration requests transmitted before, during and after a pending handover event;
Figure 4 illustrates message transmissions between network nodes according to one embodiment; and
Figure 5 illustrates the generation of a shortMAC-I.

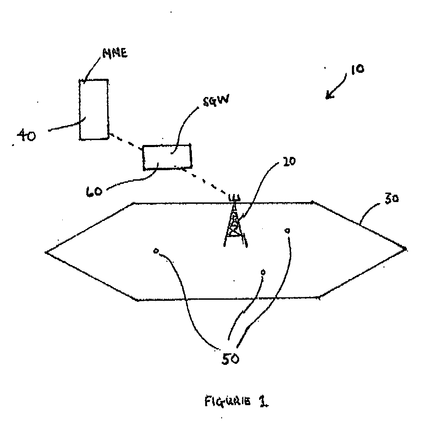

Figure 1 illustrates a wireless telecommunications system 10 according to one embodiment. User equipment 50 roam through the wireless telecommunications system 10. Base stations 20 are provided which support areas of radio coverage 30. A number of such base stations 20 are provided and are distributed geographically in order to provide a wide area of coverage to user equipment 50. When user equipment 50 is within an area served by a base station 20, communications may be established between the user equipment 50 and the base station 20 over associated radio links.

Each base station 20 typically supports a number of sectors within the geographical area of service 30.

Typically. a different antenna within a base station 20 supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment 50 and base stations 20 that may be present in a typical communications system 10.

The wireless communications system is managed by Mobility Management Entity (MME) 40. The MME 40 controls operation of the wireless communications system by communicating with a plurality of base stations 20 via Serving Gateways (SGW) 60. The MME 40 also communicates with user equipment 50 via each base station 20 and thus effectively manages the wireless communications system.

MME 40 maintains location information which provides information on the location of user equipment 50 within the wireless communication system 10. The MME 40 is operable to signal to SGW 60 to route data traffic through the telecommunications network, from a core network to user equipment 50 and vice versa.

User equipment 50 typically transmits information and data to a base station 20 so that it can be re-routed within a wireless telecommunications network. User equipment 50 may, for example, need to transmit data to the base station 20 in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

A radio link is a dedicated connection between user equipment 50 and a cell of a base station 20. These dedicated radio links are formed when user equipment 50 is in an "RRC-Connected" state. When user equipment 50 is not transmitting information such as text messages or voice information to a base station 20 it is in a so-called "RRC-idle" state. When user equipment 50 has information to transmit to a base station 20 it chooses a connected state within which to operate. When in an "RRC-Connected" state user equipment 50 is able to use high-speed uplink packet access radio resources to achieve a high uplink throughput.

Movement between sectors provided by a single base station 20 and movement between coverage areas, that is to say movement between base stations 20 whilst user equipment 50 is in an active state are known as "mobility events" or "handover" and are overseen by the MME 40. Such mobility events may include an inter-cell handover (i.e. movement between cells of different base stations 20) or an intra-cell handover (i.e. movement between cells of the same base station 20). A mobility event is typically identified when the MME 40 identifies, through measurement reports from the user equipment 50 indicating characteristics of pilot signals received from cells other than the cell currently serving the user equipment 50, that a target cell is a better candidate to serve the user equipment 50. The serving and target base stations are notified of the trigger event.

Configuration information is then transmitted by the MME 40 to the target base station and the user equipment 50 via the source base station to enable a handover to occur. Due to the integrity protection (IP) mechanisms in LTE, it is necessary to ensure that the user equipment 50 has information to enable it to be re-keyed for communication with the target base station. Accordingly, the reconfiguration messages sent from the serving base station to the user equipment 50 will include security information to enable the change in integrity protection to occur.

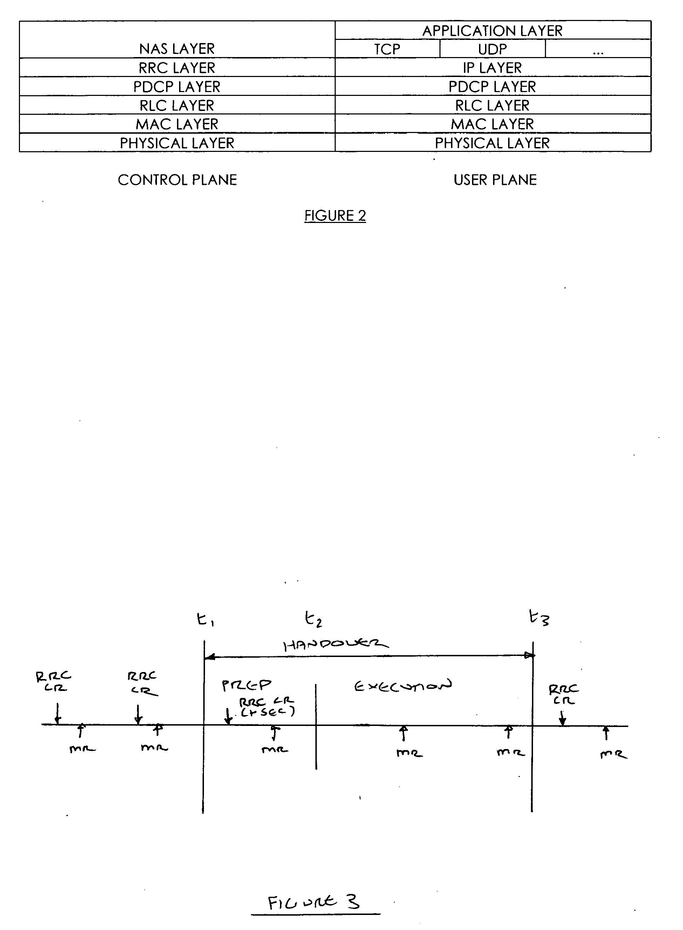

Figure 3 illustrates existing techniques for transmission of Radio Resource Control Connection Reconfiguration requests transmitted before, during and after a pending handover event. As shown in Figure 3, various RRC connection reconfiguration requests (RRC CR) will be transmitted by the serving base station and the user equipment will, amongst other things, transmit various measurement reports (MR) to the serving base station. Previously, RRC CR messages which were unrelated to a handover would have contained no updates to the security configuration since none was necessary.

At time t₁, the MME 40 determines based on the measurement reports that a handover to a target base station may be required and so the subsequent RRC CR message will include a security update providing update to the integrity protection configuration (such as new key information and new authentication algorithm information) for the target base station.

At time t₂, handover preparation is complete and, thereafter, by time t₃, either the handover has occurred or the handover event is cancelled. For the period between time t₁ and t₃, the serving base station is aware that a trigger event is pending. Whilst the trigger event remains pending the RRC CR message is transmitted with the updated security information. Prior to the trigger event occurring at time t₁, no such update in security information occurs. Likewise, after time t₃, no trigger event is pending and any RRC CR messages are once again transmitted without any update to the security information.

The RRC CR messages may change various parameters at different protocol layers of the user equipment. Figure 2 illustrates different protocol layers that may be found in an LTE implementation. The architecture can be split generally into a control plane and a user plane. Within the control plane and the user plane there is provided a physical layer, a Media Access Control (MAC layer), a Radio Link Control (RLC) layer, and a Packet Data Convergence Protocol (PDCP) layer. In the control plane, this is overlaid with a Radio Resource Control (RRC) layer and a Non-Access Stratus (NAS) layer. In the user plane, there is provided an Integrity Protection (IP) layer, a transmission control protocol (TCP) and user datagram protocol (UDP) layers, together with an application layer.

Reconfiguration of many of the parameters of these protocol layers, particularly those triggered by a demand from applications running in the application layer, are routinely requested by the serving base station. As mentioned above, previously when such configuration changes were requested, no change in the security configuration of the user equipment 50 was requested since such a change in the security configuration was not required except when then reconfiguration related to a handover and it was therefore necessary to include security information relating to the security configuration of the cell to which handover is to occur. Accordingly, it can be seen that there is a large class of such reconfiguration requests for which no change in security configuration was required. As will be discussed in more detail below, these changes in configuration may previously have led to a mismatch in the known configuration between the user equipment 50 and the network. This can be inconvenient, particularly where resources are requested but not allocated or where resources that have been previously allocated are requested to be removed but still remain allocated. This can lead to the spurious and unexpected operation of the user equipment 50 and result in resources being allocated to perform tasks that are no longer required. This, in turn, may lead to the unavailability of resources for other tasks.

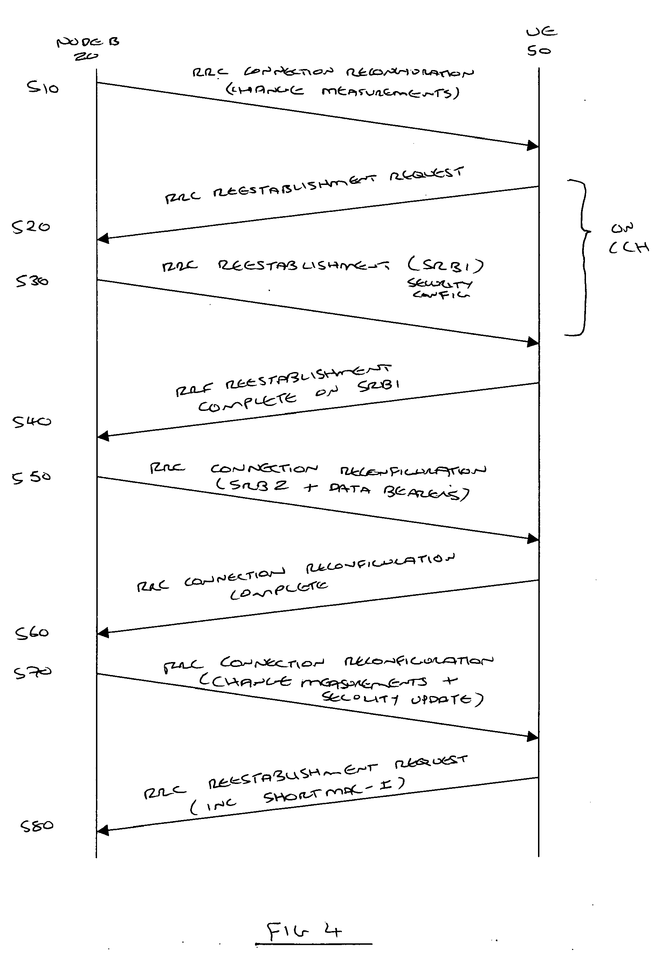

As will be described in more detail below, with reference to Figure 4, configuration changes for which it is desired to know whether the configuration change has occurred or not are transmitted together with a security update to force a change in the security configuration of the user equipment, despite there being no handover trigger pending.

At step S10, the serving base station will initially transmit a conventional RRC connection reconfiguration message to the user equipment 50. Such a message may include reconfiguration of, for example, the measurement reports made by the user equipment 50, a change in the number of bearers used by the user equipment, or some other reconfiguration of parameters of the layers of the user equipment which are not directly related to a pending handover event. Should the user equipment 50 correctly receive the RRC connection reconfiguration message from the serving base station and be able to implement the reconfiguration requested, the user equipment 50 would then respond with an RRC connection reconfiguration complete message (not shown) to the serving base station. However, in this example, either the user equipment 50 did not receive the RRC connection reconfiguration message due to a radio link failure, was unable to correctly transmit the RRC connection reconfiguration complete message to the serving base station due to a radio link failure, or was unable to implement the reconfiguration changes requested.

Accordingly, at step S20, the user equipment 50 transmits an RRC re-establishment request on a common channel. Although provision exists to enable the user equipment 50 to encode an indicator in the RRC re-establishment request message indicating why this message is being sent, in this example such an indicator is not encoded or correctly encoded since the user equipment 50 is not fully compliant.

Accordingly, the base station responds at steps S30 to S50 to re-establish communications with the user equipment 50.

At step S30 an RRC connection reconfiguration message for bearer SRB1 is sent to the user equipment 50.

At step S40, the user equipment 50 responds with an RRC re-establishment complete message on bearer SRB 1.

This continues at steps S50 and S60 for any subsequent bearers (in this case just bearers SRB2 and any data bearers).

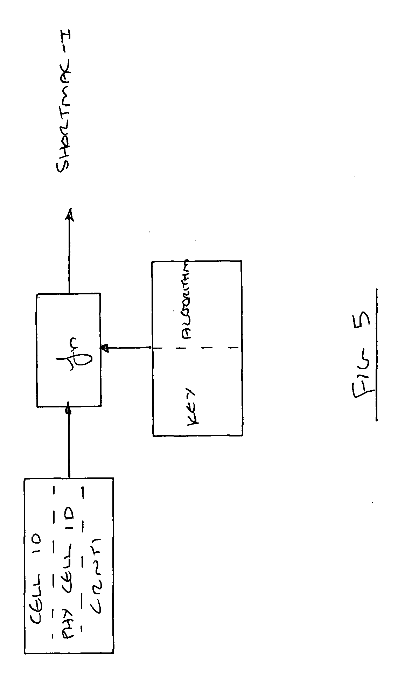

Now that the connection between the serving base station and the user equipment 50 has been re-established, the serving base station will transmit, at step S70, another RRC connection reconfiguration message which includes the reconfiguration requested at step S10 but also includes updated security information to force a change in the security state of the user equipment 50. Although, as mentioned previously, the change in security state of the user equipment 50 is not strictly necessary since the configuration change requested is unrelated to a change in cell, by including an update to the security configuration of the user equipment 50, it is possible to determine from subsequent messages whether this RRC connection reconfiguration message has been received and the configuration changes made. This is because the change in security configuration will change the shortMAC-I received in subsequent messages, if the RRC connection reconfiguration message sent at step S70 is correctly received and implemented, as will be explained in more detail below with reference to Figure 5.

Should the user equipment 50 correctly receive the RRC connection reconfiguration message from the serving base station and be able to implement the reconfiguration requested, the user equipment 50 would then respond with an RRC connection reconfiguration complete message (not shown) to the serving base station.

However, again in this example, either the user equipment 50 did not receive the RRC connection reconfiguration message due to a radio link failure, was unable to correctly transmit the RRC connection reconfiguration complete message to the serving base station due to a radio link failure, or was unable to implement the reconfiguration changes requested. Accordingly, at step S80, the serving base station receives an RRC re-establishment request.

Such an RRC re-establishment requests includes a shortMAC-I which, as illustrated in Figure 5, is dependent on the security configuration of the user equipment. In particular, a function is applied to the cell ID, physical cell ID, and CRNTI (all of which will remain unchanged for user equipment remaining within the same cell) based on the key configuration and algorithm configuration of the integrity protection (IP) regime specified in the security configuration. Hence, the shortMAC-I is generated from the cell ID, physical cell ID and CRNTI by applying the current key and the current algorithm specified by the security configuration being utilised by the user equipment 40. Accordingly, even though the cell ID, physical cell ID and CRNTI will remain constant, if the change in security configuration requested in the RRC connection reconfiguration message sent at step S70 causes an update to the key information and algorithm information, the shortMAC-I will change. If the key information and algorithm information is not updated either because the message sent at step S70 was not received or because the user equipment is unable to implement the configuration changes, then the shortMAC-I will be the same as that transmitted previously. Accordingly, at step S80, it is possible to determine whether the requested configuration change has been made by simply examining the shortMAC-I included in the RRC re-establishment request message. Should the shortMAC-I of the RRC re-establishment request message indicate that the requested changes have been made, then the serving base station may determine that the RRC re-establishment request is simply due to a loss of radio link between the user equipment 50 and the serving base station. If the serving base station determines from the shortMAC-I that the requested configuration changes have not been made, then the serving base station may seek to re-establish the user equipment 50 in a similar manner to steps S30 to S60 mentioned above and then re-try the RRC connection reconfiguration message sent at step S70 a further number of times. Should the reconfiguration fail to occur, then this is likely to indicate that the user equipment 50 is unable to implement the requested changes and the serving base station may indicate this to the core network.

Accordingly, it can be seen that the RRC connection reestablishment procedure may introduce misalignment between the user equipment 50 and the base station configurations. The RRC connection res-establishment procedure is typically initiated by the user equipment when one of the following conditions is met (only when AS security has been activated): upon detecting radio link failure; upon handover failure; upon mobility from E-UTRA failure; upon integrity check failure indication from lower layers; upon an RRC connection reconfiguration failure. An *RRCConnectionReestablishmentRequest* message is sent to the base station to start the procedure. This message is not protected by PDCP operation but a ShortMAC-I is included in the message to identify and authenticate the user equipment 50. The ShortMAC-I is computed based on the current security configuration, the one applicable at the time the RRC connection re-establishment is triggered.

In the case of re-establishment support when a RRC connection reconfiguration procedure which has no impact on security configuration is ongoing, such as for reconfiguration of bearer management or measurement management, two security configurations are possible: "Security configuration 1" - the one applicable before and after the RRC connection reconfiguration; and "Security configuration 2" - the one applicable after the RRC connection re-establishment. The ShortMAC-I is in this scenario always computed at the user equipment 50 side with the "Security configuration 1 ".

In these circumstances there is no reliable way at the base station to differentiate the two following cases: in case of a radio link failure detected before reconfiguration request reception (crossing between *RRCConnectionReconfiguration* and *RRCConnectionReestablishmentRequest*) or *RRCConnectionReestablishmentRequest* sent as reconfiguration failure answer from the user equipment 50; or in case of radio link failure detected after the completion of reconfiguration, the *RRCConnectionReestablishmentRequest* may be received at the base station before (and instead of) the *RRCConnectionReconfigurationComplete* message. Even if this scenario is rare, it is important because SRB0 has higher priority than SRB1 or SRB2. Hence, at the base station, there is no way to be sure of the current user equipment 50configuration: the base station does not know if the reconfiguration was accepted and completed by the user equipment 50. The user equipment 50 configuration can either be the one applicable before the RRC connection reconfiguration or the one proposed during the RRC connection reconfiguration and so there is a potential misalignment between the user equipment 50 and the base station configuration.

As mentioned above, one solution that can be used to solve this issue is to initiate an intra-cell handover and to apply it simultaneously with the RRC connection reconfiguration. Then, on any RRC connection reconfiguration triggered at the base station level, the base station is able to detect the Success / Failure of the current procedure, and to control the configuration applied at the user equipment 50 level. In particular, if base station applies an intra-cell handover simultaneously to the RRC connection reconfiguration, the ShortMAC-I properties enable it to be known if the reconfiguration procedure is accepted at the user equipment 50 level and consequently, prevent from misalignment between user equipment 50 and base station configurations.

The current standards fail to fully recognise the failure cases of the RRC connection reconfiguration procedure: indeed, in some particular scenarios, the base station may not be able to control the user equipment 50 configuration after the failed procedure completion. Although the parameter *reestablishmentCause* in *RRCConnectionReestablishmentRequest* message can be used by the user equipment 50 to indicate the trigger for RRC connection re-establishment procedure with one of the 3 following cause values: '*reconfigurationFailure', 'handoverFailure',* '*otherFailure*', the user equipment 50 may not fill the cause according to the real failure. From the base station point of view, it is not safe to rely on this parameter, and to define functional behaviours based on its value. Moreover, the scenario leading to misalignment are not avoided.

Embodiments apply an intra-cell handover in the meantime, in order to change the security keys. The change on security keys will avoid inconsistencies between user equipment and base station configurations in case of RRC connection reconfiguration failure, and it will ensure the base station can reliably control the final user equipment configuration.

In the case of additional Measurement configuration after initial context setup or intra-system handover: After an initial context setup, or intra-system handover, a reconfiguration of additional measurements may need to be initiated though a subsequent RRC connection reconfiguration procedure. If the base station applies an intra-cell handover simultaneously, the check on ShortMAC-I sent by the user equipment 50 in case of failure will allow the base station to know the final measurement configuration on the user equipment side: If the ShortMAC-I is computed with the initial security configuration, the one applicable before the RRC connection reconfiguration, then the measurements configured on the user equipment 50 side are the one that were applicable before the RRC connection reconfiguration; If the ShortMAC-I is computed with the new security configuration, the one that would have been applicable after the RRC connection reconfiguration, then the measurements configured on the user equipment 50 side are the one proposed in the RRC connection reconfiguration procedure.

If the base station does not utilise this technique, there may be some inconsistencies in LTE system between the user equipment 50 configurations and the expected user equipment 50 configurations at base station level. Then, if misalignment is confirmed on a given user equipment 50, the next required reconfigurations won't be filled accurately: indeed, the next reconfigurations are defined at base station level and are based on a comparison between current user equipment 50 configuration and new expected configuration. This can lead to misconfigurations if the current expected configuration at base station level does not reflect the reality in this case. However, if a base station utilises this technique, the user equipment 50 configuration is entirely controlled at any time at the base station level.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of determining a configuration of a first network node in response to a change in configuration of said first network node requested by a second network node of a wireless telecommunications network, said method comprising the steps of:
even when no pending handover trigger involving said first network node has been identified by said second network node, transmitting a reconfiguration message from said second network node to said first network node, said reconfiguration message encoding both updated configuration information and updated security information, said updated configuration information requesting an existing configuration of said first network node to be changed to an updated configuration and said updated security information requesting an existing security configuration for authentication between said first and second network nodes to be changed to an updated security configuration; and
determining said configuration of said first network node from authentication information encoded in a message received from said first network node, said authentication information being encoded in accordance with that security configuration being utilised by said first network node.

2. The method of claim 1, wherein said step of determining comprises determining whether said first network node is configured to said existing configuration or said updated configuration based on whether said authentication information is encoded in accordance with said existing security configuration or said updated security configuration.

3. The method of claim 1 or 2, wherein said step of determining comprises determining that said first network node has not reconfigured to said updated configuration when said authentication information is encoded in accordance with said existing security configuration.

4. The method of any preceding claim, wherein said step of determining comprises determining that said first network node remains in said existing configuration when said authentication information is encoded in accordance with said existing security configuration.

5. The method of any preceding claim, wherein said step of determining comprises determining that said first network node has reconfigured to said updated configuration when said authentication information is encoded in accordance with said updated security configuration.

6. The method of any preceding claim, comprising the steps of:
performing said steps of transmitting and determining when a message is received indicating that said first network node is unlikely to have reconfigured to said updated configuration in response to an earlier reconfiguration message from said second network node encoding said updated configuration information without said updated security information.

7. The method of any preceding claim, wherein said message comprises a Radio Resource Control (RRC) Re-establishment Request.

8. The method of any preceding claim, wherein said authentication information comprises a shortMAC-I.

9. The method of any preceding claim, wherein said updated configuration information requests said first network node to change configuration of at least one of characteristics of the first network node physical layer, Media Access Control (MAC) layer, Radio Link Control (RLC) layer and Radio Resource Control (RRC) layer.

10. The method of any preceding claim, wherein said updated configuration information requests said first network node to change configuration of at least one of a bearer and measurements to be made by said first network node.

11. The method of any preceding claim, wherein said updated security information requests said first network node to utilise updated encryption characteristics for authentication.

12. The method of any preceding claims, wherein said reconfiguration message comprises an RRC Connection Reconfiguration Message.

13. The method of any preceding claim, wherein said first network node comprises user equipment and said second network node comprises a base station.

14. A network node operable to determine a configuration of a first network node of a wireless telecommunications network in response to a requested change in configuration, said network node comprising:
transmission logic operable, even when no pending handover trigger involving said first network node has been identified by said second network node, to transmit a reconfiguration message from said second network node to said first network node, said reconfiguration message encoding both updated configuration information and updated security information, said updated configuration information requesting an existing configuration of said first network node to be changed to an updated configuration and said updated security information requesting an existing security configuration for authentication between said first and second network nodes to be changed to an updated security configuration; and
determination logic operable to determine said configuration of said first network node from authentication information encoded in a message received from said first network node, said authentication information being encoded in accordance with that security configuration being utilised by said first network node.

15. A computer program product operable, when executed on a computer, to perform the method steps of any one of claims 1 to 13.
